# FASCICULE DE BREVET EUROPEEN

(11) **EP 3 513 508 B1**
(45) Date de publication et mention de la délivrance du brevet: **09.09.2020**
(21) Numéro de dépôt: 17783911.5
(22) Date de dépôt: 12.09.2017
(51) Int. Cl.: H04B 7/06

(54) **TECHNIQUE DE MODULATION SPATIALE AMELIOREE, DISPOSITIFS EMETTEUR ET RECEPTEUR ASSOCIES**
VERBESSERTE RÄUMLICHE MODULATION, ENTSPRECHENDE SENDE- UND EMPFANGSVORRICHTUNGEN
IMPROVED SPATIAL MODULATION TECHNIQUE, ASSOCIATED TRANSMISSION AND RECEPTION DEVICES

(30) Priorité: 13.09.2016 FR 1601344
(43) Date de publication de la demande: 24.07.2019
(73) Titulaire: Institut National des Sciences Appliquées de Rennes, 35708 Rennes Cedex 7 (FR)
(72) Inventeur: MOKH, Ali, 92160 Antony (FR); HELARD, Maryline, 35700 Rennes (FR); KOKAR, Yvan, 35700 Rennes (FR); CRUSSIERE, Matthieu, 35890 Laille (FR); PREVOTET, Jean-Christophe, 35500 Vitre (FR)
(74) Mandataire: Novagraaf Technologies
(86) Numéro de dépôt international: PCT/FR2017/052424
(87) Numéro de publication internationale: WO 2018/051006

(56) Documents cités:
- EP-A2- 2 540 123
- US-A1- 2006 233 276
- ONUR OSMAN: "Variable antenna-space shift keying for high spectral efficiency in exponentially correlated channels", INTERNATIONAL JOURNAL OF COMMUNICATION SYSTEMS., vol. 30, no. 1, 14 novembre 2014 (2014-11-14), page e2895, XP055358172, GB ISSN: 1074-5351, DOI: 10.1002/dac.2895
- RONALD Y CHANG ET AL: "New Space Shift Keying Modulation with Hamming Code-Aided Constellation Design", IEEE WIRELESS COMMUNICATIONS LETTERS, IEEE, PISCATAWAY, NJ, USA, vol. 1, no. 1, 1 février 2012 (2012-02-01) , pages 2-5, XP011414172, ISSN: 2162-2337, DOI: 10.1109/WCL.2012.102711.110037

## Description

### 1. Domaine de l'invention.

L'invention concerne des techniques de communication numérique par transmissions radioélectriques. L'invention concerne plus particulièrement l'augmentation de la capacité de transmission d'un canal dans un système multi-antennes mettant en œuvre une modulation spatiale.

### 2. Etat de l'art.

De nombreuses techniques de modulation existent pour la mise en œuvre de systèmes de transmissions par émission et réception de signaux radioélectriques. Parmi les différentes modulations existantes sont apparues récemment des techniques de modulations spatiales où l'activation d'un ou plusieurs émetteurs émettant respectivement vers un ou plusieurs récepteurs sur un intervalle de temps prédéterminé, code de l'information, outre les données pouvant être portées par l'utilisation d'une autre modulation (transmission d'un symbole). Parmi ces modulations spatiales figurent la modulation RASK (de l'acronyme « Receive Antenna Shift keying » et qui signifie codage par décalage d'antenne cible) ou encore RSM (de l'acronyme « Receive Spatial Modulation » et qui signifie modulation spatiale en réception »), par exemple.

Le brevet EP 2 540 123 B1, i intitulé « ENHANCED SPATIAL MODULATION », décrit un procédé de modulation spatiale pour identifier un élément émetteur au sein d'un réseau d'émission constitué d'au moins deux éléments émetteurs. Ce type de modulation présente un ratio, entre la complexité de mise en œuvre et la capacité de canal, susceptible d'être amélioré.

### 3. Résumé de l'invention.

L'invention permet d'améliorer au moins une partie des inconvénients de l'art antérieur en proposant un procédé de transmission, depuis une pluralité d'antennes d'émission, d'un signal source comprenant une pluralité de séquences binaires, vers au moins une antenne utilisée en réception. Le procédé selon l'invention met en œuvre, préalablement à une étape d'émission de l'une des séquences binaires du signal source à transmettre :
- une émission d'une information représentative du nombre n d'antennes d'émission,
- une détermination, par un récepteur associé à l'antenne de réception, du nombre d'antennes d'émission,
- une détermination d'un rang affecté à chacune des antennes d'émission dans une des séquences binaires à communiquer (ce qui constitue une table de correspondance ou 'mapping' du terme générique obtenu de l'anglais), et,
- une détermination, par le récepteur associé, et pour chacune des combinaisons d'émission des *n* antennes d'émission, d'un profil électromagnétique représentatif de cette combinaison,

Ainsi, il est possible de transmettre simultanément n éléments binaires formant une des séquences binaires (ou symboles) composant successivement un flot de données utiles. En d'autres termes, le procédé selon l'invention permet d'émettre des symboles de n bits formant une desdites séquence binaire en utilisant n antennes en émission.

Selon un mode de réalisation de l'invention, le profil électromagnétique de chacune des combinaisons possibles de transmission est représentatif d'un élément binaire d'une des séquences binaires possiblement à transmettre dans le flot de séquence binaires porté par le signal source.

Avantageusement, et selon une variante, le profil électromagnétique de chacune des combinaisons de transmission est représentatif d'une pluralité d'éléments binaires successifs (encore appelé symbole ou symbole spatial) d'une des séquences binaires possiblement à transmettre.

Avantageusement, et selon une variante du mode de réalisation de l'invention, les antennes d'émission émettent chacune à un niveau de puissance qui lui est propre, ce qui permet d'améliorer la discrimination entre les différentes combinaisons de transmission utilisées (c'est-à-dire les combinaisons d'antennes utilisées en émission).

L'invention concerne également un dispositif émetteur adapté à la mise en œuvre du procédé précité et comprenant alors une pluralité d'antennes d'émission d'un signal source, avec ce signal source comprenant lui-même une pluralité de séquences binaires à transmettre vers l'antenne utilisée en réception et associée à un récepteur distant de l'émetteur, le dispositif émetteur selon l'invention comprend :
- un module de transmission, vers le récepteur distant associé à l'antenne de réception, d'une information représentative du nombre d'antennes d'émission du dispositif émetteur,
- un module de transmission d'une information représentative d'un rang (ou poids) affecté à chacune des antennes d'émission dans une des séquences binaires à communiquer, et,
- un module de transmission, vers le récepteur associé, et pour chacune des combinaisons d'émission des antennes d'émission, d'un signal représentatif d'un profil électromagnétique, lequel profil est, pour chacune de ses instances, lui-même représentatif de chacune des combinaisons d'émission (élément binaire ou symbole spatial).

L'invention concerne également un dispositif récepteur adapté à la mise en œuvre du procédé selon l'invention, décrit précédemment, et qui comprend au moins une antenne de réception configurée pour la réception du signal source envoyé par le dispositif émetteur distant, lequel comprenant une pluralité d'antennes d'émission, le signal source comprenant une pluralité de séquences binaires, et le dispositif récepteur comprenant alors :
- un module de détermination du nombre d'antennes d'émission utilisées par le dispositif émetteur,
- un module de détermination d'une information représentative d'un rang affecté à chacune des antennes d'émission du dispositif émetteur distant, dans une des séquences binaires à recevoir (ce qui constitue là aussi une table de correspondance ou 'mapping' entre une antenne et un élément binaire à transmettre ou encore une antenne et un symbole spatial), et,
- un module de détermination, par le récepteur selon l'invention, et pour chacune des combinaisons d'émission des antennes d'émission de l'émetteur distant, d'un profil électromagnétique représentatif de chacune des combinaisons d'émission.

L'invention concerne enfin un produit programme d'ordinateur chargeable directement dans la mémoire interne d'un ordinateur comprenant des portions de code de logiciel pour l'exécution des étapes du procédé selon l'invention lorsque ce programme est exécuté sur un ordinateur.

Avantageusement, le procédé selon l'invention est utilisé conjointement dans un récepteur opérant en qualité de « station de base » et dans un émetteur opérant en qualité d'« objet connecté » et permet d'augmenter la capacité de transmission du canal entre ces deux équipements tout en localisant les mécanismes complexes au niveau du récepteur « station de base ».

Avantageusement, la technique de modulation spatiale mise en œuvre par le procédé décrit, permet de coder les éléments binaires successifs des séquences binaires constituant le flot de transmission de données, par émissions successives depuis une antenne parmi la pluralité d'antennes d'émission ou depuis une combinaison d'antennes parmi la pluralité d'antennes d'émission.

Astucieusement, c'est donc le fait qu'une antenne émette ou non pendant une durée symbole (ou temps symbole) qui code l'information à transmettre ou participe au codage de l'information à transmettre.

Les étapes de détermination du nombre d'antennes n en émission, puis de mémorisation d'une table de correspondance entre des profils électromagnétiques et des symboles spatiaux, ainsi que du rang ou poids attribué à chacune des antennes ou chacune des combinaisons d'antennes utilisées à l'émission constituent une phase de calibration préalable à la transmission des données utiles.

Selon l'invention, le récepteur opère, lors d'une transmission de données utiles, et après la phase de calibration décrite ci-avant, une discrimination de l'antenne ou de la combinaison d'antennes ayant émis pendant une durée symbole et délivre, au cours de la transmission des données, le symbole correspondant à l'antenne identifiée comme étant émettrice ou à la combinaison d'antennes identifiées comme étant émettrices, selon la correspondance précédemment établie lors de la phase initiale (préalable) de calibration.

### 4. Liste des figures.

L'invention sera mieux comprise, et d'autres particularités et avantages apparaîtront à la lecture de la description qui va suivre, la description faisant référence aux dessins annexés parmi lesquels :
- la **figure 1** représente un système de communications de données par voie électromagnétique selon un mode de réalisation particulier et non limitatif de l'invention.
- la **figure 2** est un diagramme représentant des étapes essentielles du procédé de transmission selon un mode particulier et non limitatif de l'invention.

### 5. Description détaillée de modes de réalisation de l'invention.

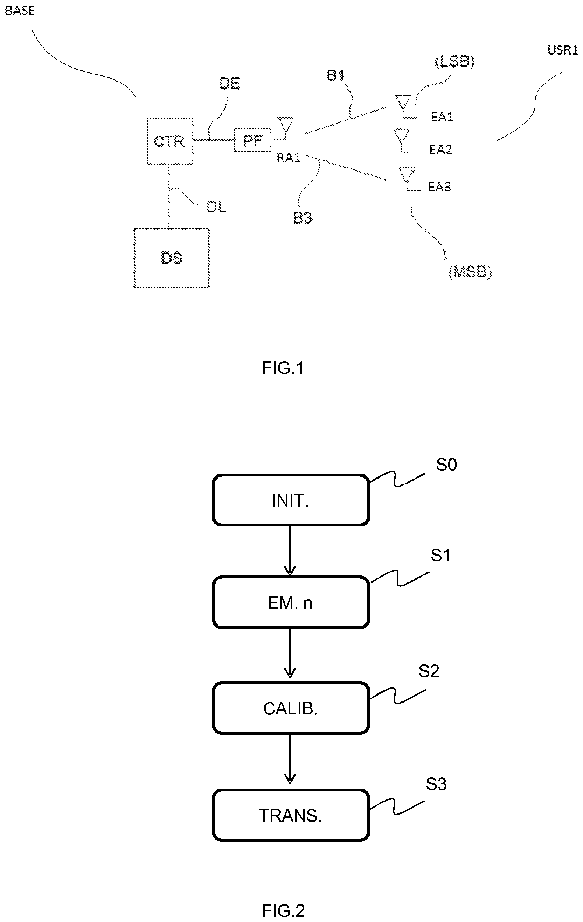

Sur la figure 1, les modules représentés sont des unités fonctionnelles, qui correspondent ou non à des unités physiquement distinguables. Par exemple, ces modules ou certains d'entre eux sont regroupés dans un unique composant, ou constitués des fonctionnalités d'un même logiciel. *A contrario,* selon d'autres modes de réalisation, certains modules sont composés d'entités physiques séparées.

La **figure 1** représente un système de communications de données par voie de communication électromagnétique selon un mode particulier et non limitatif de l'invention.

Le système de communication électromagnétique comprend un émetteur-récepteur BASE opérant préférentiellement comme une « station de base » ainsi qu'un émetteur-récepteur USR1 opérant préférentiellement comme un « objet connecté » susceptible de fonctionner dans le système parmi une pluralité d'autres objets connectés à une même station de base. A titre d'exemple non limitatif, la station de base peut être un dispositif modem routeur agissant comme une passerelle pour un réseau local, dans une zone, un espace géographique délimité ou encore un logement, par exemple, et l'objet connecté USR1 peut être un dispositif portable de type ordinateur, tablette, montre intelligente, *smartphone,* récepteur audiovisuel ou une quelconque évolution de ces produits bien connus du grand-public et largement utilisés par celui-ci.

Dans les paragraphes qui suivent, on s'attachera principalement au fonctionnement en mode récepteur de l'équipement « station de base » BASE et au fonctionnement en mode émetteur de l'équipement « objet connecté » USR1. En effet, la technique de modulation spatiale selon l'invention vise notamment à accroitre la capacité de la voie montante d'un tel système de transmission.

Il est entendu ici par « station de base » une base (nœud) d'un maillage d'un réseau de transmission de données comprenant une pluralité de dispositifs mobiles configurés pour communiquer entre eux et pour communiquer avec d'autres dispositifs mobiles, similaires ou non, connectés à d'autre « stations de base » reliées à cette même base de maillage, et plus largement à ce même maillage réseau, directement ou indirectement. Traditionnellement, la « station de base » telle que définie ici met en œuvre la partie électromagnétique d'un système de communication, le maillage pouvant être filaire. Evidemment, un tel maillage pourrait aussi être constitué de liaison sans fil.

Il est en outre entendu ici par « objet connecté » un dispositif mobile tel que précité ci-avant et adapté à communiquer avec des dispositifs pairs dans un même réseau de communication auquel il est connecté par l'intermédiaire d'une « station de base ».

Selon le mode de réalisation préféré de l'invention, la station de base BASE comprend un cœur numérique DS qui constitue la partie « intelligente » de cet équipement. La station de base comprend en outre, connectée au cœur numérique DS un contrôleur (interface) de communication CTR configuré pour mettre en œuvre des opérations de modulation / démodulation selon l'invention. Un système de pré-filtrage PF est également compris dans la station de base BASE, notamment aux fins d'effectuer un pré-filtrage utile à une modulation spatiale lors de transmissions électromagnétique en mode descendant. Le préfiltre PF opère une focalisation vers des antennes d'un dispositif mobile connecté (récepteur) en fonction d'un symbole à transmettre. Un bus de communication numérique DL assure les échanges entre le cœur numérique DS et le contrôleur-interface CTR. Un second bus de communication DE relie le contrôleur au préfiltre PF. Selon le mode de réalisation préféré, la station de base comprend une antenne RA1 utile aux transmissions de données.

Les modules DS, CTR et PF comprennent chacun un ensemble de dispositifs utiles à leur fonctionnements propres, parmi lesquels un ou plusieurs microcontrôleurs, de la mémoire non-volatile, de la mémoire de travail volatile à accès rapide, des circuits d'horloges, un ou plusieurs circuits de remise à zéro et de supervision d'alimentation, des ports d'extension et de contrôle, etc. L'ensemble de ces circuits, aujourd'hui communs à tout dispositif électronique classiquement intégré et/ou embarqué, n'est pas décrit plus encore ici puisque ne participant pas à la compréhension de l'invention.

Il en va de même pour ce qui concerne l'ensemble des modules interne du dispositif objet connecté qui n'est pas détaillé ici, puisque son détail est inutile à la compréhension de l'invention qui consiste en un procédé de modulation spatiale améliorée.

Le dispositif objet connecté USR1 n'apparait en somme ici que comme un équipement comprenant un dispositif émetteur-récepteur disposant de n antennes EAn utilisables en émission selon des combinaisons pour lesquelles chaque antenne parmi les n antennes EAn émet ou n'émet pas.

Chacune des combinaisons d'émission ainsi possibles serait visible sous la forme d'un profil électromagnétique par une antenne en réception de la station de base BASE.

Il n'est pas non plus fait mention des moyens d'alimentation électrique (depuis le secteur ou par batterie) qui pourront être considérés comme classiques ou usuels à la date de l'invention.

Avantageusement et selon des variantes, la station de base BASE peut comprendre une pluralité d'antenne RA1, RA2, RA3, ... RA opérant simultanément ou séquentiellement.

Toujours selon le mode de réalisation de l'invention, le dispositif objet connecté USR1 comprend trois antennes EA1, EA2 et EA3 utiles aux transmissions numériques avec la station de base BASE.

Les communications électromagnétiques entre la station de base BASE et l'objet connecté USR1 sont opérées selon des faisceaux de communication B1, B2 (non représenté sur la figure) et B3 respectivement définis par les trajets RA1-EA1, RA1-EA2 et RA1-EA3.

Afin de permettre une communication d'un flot de données montant entre l'objet connecté USR1 et la station de base BASE, le procédé selon l'invention met astucieusement en œuvre des étapes de :
- détermination, par la station de base BASE du nombre d'antennes d'émission EAn de l'objet connecté USR1,
- détermination d'un rang (encore appelé communément poids ou poids binaire) affecté à chacune des antennes d'émission EAn dans une des séquences binaires à transmettre, et,
- détermination, par la station de base BASE, et pour chacune des combinaisons d'émission des antennes d'émission EAn, d'un profil électromagnétique (ou électromagnétique) représentatif de cette combinaison et d'un élément binaire ou d'une séquence d'éléments binaires (symboles spatiaux).

Avantageusement, le procédé mis en œuvre permet la création d'une table de correspondance de profils électromagnétiques caractérisant le canal de transmission composé des faisceaux B1, B2 et B3, avec des symboles logiques (binaires ou spatiaux) à transmettre et dont la succession permettra le codage du flot de données utiles entre l'objet connecté USR1 et la station de base BASE.

Ces différentes étapes constituent ensemble une phase de calibration préalable à la transmission de données utiles.

Ainsi, lors d'une transmission de l'objet connecté USR1 vers la station de base BASE (voie montante), celle-ci compare, pour chaque temps symbole, le profil électromagnétique du canal en réception, encore appelé communément signature, avec ceux précédemment enregistrés lors de la phase de calibration préalable. Des méthodes de comparaison mises en œ uvre par la station de base permettent ainsi de définir le symbole en réception.

Par exemple, une phase de calibration selon le procédé précité pourrait établir une table de correspondance de la façon suivante :
i) l'objet connecté USR1 détecte la station de base et lui transmet des informations représentatives de sa configuration, parmi lesquelles le nombre d'antennes dont il est équipé.
ii) la station de base BASE répond à l'objet connecté et lui indique se mettre en attente d'informations complémentaires sur sa configuration.
iii) l'objet connecté USR1 émet un signal depuis son antenne EA1 seulement, pendant un temps prédéfini, et indique dans un champ d'informations à suivre que cette première configuration d'émission doit être associée à la sequence binaire "001".
iv) l'objet connecté USR1 émet ensuite un signal depuis son antenne EA2 seulement, pendant un temps prédéfini, et indique dans un champ d'information à suivre que cette seconde configuration d'émission doit être associée à la sequence binaire "010".
v) l'objet connecté USR1 émet ensuite un signal depuis ses antennes EA1 et EA2 simultanément, pendant un temps prédéfini, et indique dans un champ d'information à suivre que cette troisième configuration d'émission doit être associée à la sequence binaire "011".
vi) l'objet connecté USR1 émet ensuite un signal depuis son antenne EA3 seulement, pendant un temps prédéfini, et indique dans un champ d'information à suivre que cette quatrième configuration d'émission doit être associée à la sequence binaire "100".
vii) l'objet connecté USR1 émet ensuite un signal depuis ses antennes EA1 et EA3 simultanément, pendant un temps prédéfini, et indique dans un champ d'information à suivre que cette cinquième configuration d'émission doit être associée à la sequence binaire "101".
viii) l'objet connecté USR1 émet ensuite un signal depuis ses antennes EA2 et EA3 simultanément, pendant un temps prédéfini, et indique dans un champ d'information à suivre que cette sixième configuration d'émission doit être associée à la sequence binaire "110".
ix) l'objet connecté USR1 émet ensuite un signal depuis ses antennes EA1, EA2 et EA3 simultanément, pendant un temps prédéfini, et indique dans un champ d'information à suivre que cette septième configuration d'émission doit être associée à la sequence binaire "111".
x) la station de base émet alors un message vers l'objet connecté USR1 pour lui notifier avoir établi une table de correspondance entre les profils d'émission détectés pour chacune de ces combinaisons d'émission et les valeurs de symboles spatiaux respectivement associés ("001 ", "010","011","100","101","110","111"). La valeur du symbole "000" est automatiquement associée à l'absence d'émission de toutes les antennes EA1, EA2 et EA3.
xi) la station de base BASE est prête à recevoir une transmission de données utiles selon le procédé de démodulation ainsi établi.

Le procédé comprend donc, lors des transmissions de données utiles, des phases successives d'estimation de canal lors desquelles la station de base BASE enregistre les signatures (profils électromagnétiques) des différents signaux qui seront potentiellement transmis par le dispositif connecté USR1.

A titre d'exemple, la partie détection peut être mise en œuvre par un détecteur de type maximum de vraisemblance qui détermine une distance euclidienne entre le signal reçu sur l'antenne de la station de base BASE et chacune des signatures possibles correspondant aux profils acquis et enregistrés lors de la phase préalable de calibration, pour finalement choisir celle qui présente une distance minimale. Dans le cas d'un récepteur à plusieurs antennes, le principe de détection précédent peut, par exemple, être étendu à la recherche d'une distance euclidienne multidimensionnelle minimale.

Les bits sont dé-multiplexés selon des poids prédéfinis. Le nombre d'antennes en réception doit être suffisant pour permettre une bonne discrimination des signatures (profils électromagnétiques).

Astucieusement et selon l'invention, les transmissions de données utiles, postérieures à la phase de calibration, utilisent (mettent en œuvre) toutes les combinaisons possibles d'antennes d'émission parmi les n antennes d'émission EAn.

Il est à noter que selon le mode de réalisation décrit, aucune information n'est directement transportée par le signal émis depuis une antenne EAn, autre que celle interprétable par la seule présence ou absence de ce signal. En d'autres termes, le signal code l'information transportée par sa seule présence ou absence.

Bien évidemment, et selon des variantes du mode de réalisation, il est possible d'utiliser, à titre d'exemple, une modulation de type PAM (de l'anglais « Pulse Amplitude Modulation » et qui signifie modulation par amplitude d'impulsion) pour chacune des antennes en émission au lieu d'un signal de type OOK (de l'anglais « On-Off Keying », et qui signifie « codage de type allumé ou éteint »).

Avantageusement, la simplicité d'un système adapté à la mise en œuvre du procédé selon l'invention entraîne une limitation de l'énergie requise pour une transmission selon ce procédé.

Avantageusement encore, l'efficacité spectrale d'un tel système est toujours supérieure à celle d'un système selon l'art antérieur, pour un même nombre d'antennes d'émission.

Selon un mode de réalisation de l'invention, chacun des profils électromagnétiques correspondant à une combinaison d'antennes EAn est représentatif d'un élément binaire d'une desdites séquences binaires SEQi.

Cela signifie qu'une combinaison d'antennes émettant simultanément code, par exemple, un état 1 (ou un état 0) d'un bit de rang prédéterminé dans une suite d'éléments binaires.

Le tableau *T1* ci-après donne un exemple non-limitatif d'un tel codage :

**Tableau T1**

| Profil électromagnétique détecté (signature du canal) | Combinaison d'antenne | Mot logique (suite d'éléments binaires) d'une séquence binaire SEQi | | | |
|---|---|---|---|---|---|
| | | MSB | MSB-1 | LSB+1 | LSB |
| P1 | EA1+EA2 | | | | 1 |
| P2 | EA1+EA3 | | | 1 | |
| P3 | EA2+EA3 | | 1 | | |
| P4 | aucune | 1 | | | |

Astucieusement, l'absence de signal en émission sur l'ensemble des n antennes EAn participe au codage de l'information à transmettre (profil P4). Selon une variante de mode de réalisation de l'invention, chacun des profils électromagnétiques correspondant à une combinaison d'antennes EAn est représentatif d'une suite (succession) d'éléments binaires d'une desdites séquences binaires SEQi.

Le tableau *T2* ci-après donne un exemple non-limitatif d'un tel codage :

**Tableau T2**

| Profil électromagnétique détecté (signature du canal) | Combinaison d'antenne | Mot logique (suite d'éléments binaires) d'une séquence binaire SEQi | | |
|---|---|---|---|---|
| | | MSB | LSB+1 | LSB |
| P1 | aucune | 1 | 1 | 1 |
| P2 | EA1 | 1 | 1 | 0 |
| P3 | EA2 | 0 | 0 | 1 |
| P4 | EA2+EA1 | 0 | 1 | 1 |
| P5 | EA3 | 0 | 1 | 0 |
| P6 | EA3+EA1 | 1 | 0 | 1 |
| P7 | EA3+EA2 | 1 | 0 | 0 |
| P8 | EA3+EA2+EA1 | 0 | 0 | 0 |

Le procédé selon l'invention permet d'augmenter la capacité de transmission d'un canal puisque avantageusement il est possible de coder des symboles de n bits en utilisant une combinaison de n antennes. Selon l'art antérieur,et avec les modulations M-aire SSK (de l'anglais « Space Shift Keying » qui signifie littéralement « modulation spatiale par décalage » et qui désigne un type particulier de modulation spatiale), il n'était possible de transmettre que des mots logiques de log₂(n) éléments binaires (bits) avec n antennes.

On entend ici par modulation M-aire selon l'art antérieur (où habituellement M est une puissance de 2), une modulation permettant de transmettre m bits avec m = log₂(M). Dans le cas d'une modulation M-aire SSK, toujours selon l'art antérieur, M = n, où n est le nombre d'antennes utilisées en émission.

Il apparait alors bien que, la mise en œuvre du procédé selon l'invention, permet avantageusement la transmission simultanée d'un nombre n d'éléments binaires (bits). Ce nombre n est égal au nombre d'antennes utilisées en émission, et est toujours supérieur à log₂(n). La capacité d'un canal est de fait bien supérieure à celle selon l'art antérieur.

La **figure 2** est un diagramme fonctionnel représentant des étapes du procédé de transmission selon l'invention.

A l'étape S0, le système de transmission de la figure 1 comprenant l'équipement émetteur-récepteur station de base BASE et l'équipement émetteur-récepteur objet connecté USR1 est initialisé pour être notamment opérationnel en termes de capacité d'émission, de réception et de détection. C'est-à-dire que l'ensemble des dispositifs internes à chacun des équipements est initialisé et que les dispositifs sont prêts à la réalisation des étapes essentielles du procédé selon l'invention. De la même façon, les unités de contrôles des équipements BASE et USR1 sont fonctionnelles et exécutent le cas échéant l'ensemble des routines logicielles utiles à leurs fonctionnements respectifs.

A l'étape S1, l'équipement objet connecté USR1 détecte la présence de la station de base BASE et émet une trame d'information générique aux fins d'indiquer notamment à la station de base BASE le nombre n d'antennes EAn utilisables en émission par lui (le dispositif objet connecté USR1).

A l'étape S2, l'équipement station de base se positionne en configuration de calibration pour capter successivement les différents profils électromagnétiques (encore appelés communément signatures ou signatures de canal) résultant des configurations successives correspondant aux combinaisons d'émission possibles avec les n antennes EAn utilisables en émission de l'équipement objet connecté USR1. Pour chacune des combinaisons d'antennes EAn en émission, c'est-à-dire chacune des combinaisons d'émission possibles pour laquelle chaque antenne émet ou n'émet pas, l'objet connecté émet une correspondance binaire (élement binaire ou succession d'éléments binaires) à associer au profil électromagnétique qui sera visible en réception par la station de base BASE. Cette association est faite par l'émission d'une trame comprenant le ou les éléments binaires, précédemment ou postérieurement à la combinaison d'antennes en émission. Ainsi, la station de base BASE peut modéliser numériquement la signature de canal (le profil électromagnétique en réception et en provenance de l'équipement USR1) et y associer dans une table enregistrée, la correspondance binaire qui devra être interprétée puis délivrée lors d'une phase de transmission de données utiles et en présence de la configuration électromagnétique correspondant à la combinaison d'antennes propre à cette combinaison d'antennes.

A l'étape S3, la phase de calibration préalable à une transmission de données utiles est achevée et une telle transmission peut avoir lieu entre l'équipement objet connecté USR1 et la station de base BASE.

Lors d'une transmission de données utiles (étape S3), et pour chaque temps symbole, l'équipement USR1 codera l'information (élément binaire ou symbole spatial) en présentant une combinaison d'émission des n antennes EAn qui sera alors détectée en réception par la station de base BASE qui opèrera une discrimination aux fins de délivrer l'élément binaire ou la symbole binaire (spatial) en sortie. L'ensemble des informations binaires ainsi délivrées permettra la reconstruction par la station de base BASE de la séquence binaire SEQi en cours de transmission.

L'invention ne se limite pas au seul mode de réalisation décrit mais à tout système de transmission mettant en œuvre une modulation spatiale depuis n antennes en émission vers une antenne en réception et pour laquelle le procédé de transmission comprend une phase de calibration préalable comprenant elle-même une détermination d'un rang affecté à chacune des antennes d'émission dans une des séquences binaires à communiquer, et une détermination, par un récepteur associé, pour chacune des combinaisons d'émission des antennes d'émission, d'un profil électromagnétique représentatif de cette combinaison.

## Revendications

1. Procédé de transmission, depuis au moins deux antennes d'émission EAn, d'un signal source comprenant une pluralité de séquences binaires SEQi, vers au moins une antenne RA1 de réception, ledit procédé comprenant une émission (S1) d'une information représentative du nombre n d'antennes d'émission EAn et étant **caractérisé en ce qu'**il met en œuvre, préalablement à une étape d'émission (S3) de l'une desdites séquences binaires SEQi dudit signal source,
- une détermination (S2) d'un rang affecté à chacune des antennes d'émission EAn dans une desdites séquences binaires SEQi à communiquer, et,
- une détermination (S2), par ledit récepteur associé, et pour chacune des combinaisons d'émission desdites antennes d'émission EAn, d'un profil électromagnétique représentatif de ladite combinaison,
de sorte qu'il soit possible de transmettre (S3) simultanément n éléments binaires formant une desdites séquence binaire SEQi.

2. Procédé de transmission selon la revendication 1, **caractérisé en ce que** ledit profil électromagnétique est représentatif d'une pluralité d'éléments binaires successifs d'une desdites séquences binaires.

3. Procédé selon l'une quelconque des revendications 1 à 2, **caractérisé en ce que** lesdites n antennes d'émission EAn émettent chacune à un niveau de puissance qui lui est propre.

4. Procédé selon l'une quelconque des revendications 1 à 3, **caractérisé en ce que** lesdites n antennes d'émission EAn participent toutes conjointement à chacune des combinaisons d'émission, de sorte qu'il soit alors possible de coder des symboles de n bits en utilisant une combinaison de n antennes.

5. Dispositif émetteur, comprenant au moins une pluralité d'antennes d'émission EAn d'un signal source, ledit signal source comprenant une pluralité de séquences binaires SEQi à transmettre une antenne RA de réception, ledit dispositif émetteur étant **caractérisé en ce qu'**il comprend :
- un module de transmission, vers un récepteur associé à l'antenne RA de réception, du nombre n d'antennes d'émission EAn dudit dispositif émetteur,
- un module de transmission d'une information représentative d'un rang affecté à chacune des antennes d'émission EAn dans une desdites séquences binaires SEQi à communiquer, et,
- un module de transmission, vers ledit récepteur associé, et pour chacune des combinaisons d'émission desdites n antennes d'émission EAn, d'un signal représentatif d'un profil électromagnétique lui-même représentatif de ladite chacune des combinaisons d'émission.

6. Dispositif récepteur, comprenant au moins une d'antenne de réception RA d'un signal source envoyé par un dispositif émetteur distant comprenant une pluralité d'antenne d'émission EAn, ledit signal source comprenant une pluralité de séquences binaires SEQi, ledit dispositif récepteur étant **caractérisé en ce qu'**il comprend :
- un module de détermination du nombre n d'antennes d'émission EAn dudit dispositif émetteur,
- un module de détermination d'une information représentative d'un rang affecté à chacune des antennes d'émission EAn dudit dispositf émetteur distant, dans une desdites séquences binaires SEQi à recevoir, et,
- un module de détermination, par ledit récepteur, et pour chacune des combinaisons d'émission desdites antennes d'émission EAn dudit émetteur distant, d'un profil électromagnétique représentatif de ladite chacune des combinaisons d'émission.

7. Produit programme d'ordinateur chargeable directement dans la mémoire interne d'un ordinateur comprenant des portions de code de logiciel pour l'exécution des étapes du procédé selon l'une quelconque des revendications 1 à 4, lorsque ledit programme est exécuté sur un ordinateur.

## Patentansprüche

1. Verfahren zur Übertragung, ausgehend von mindestens zwei Sendeantennen EAn, eines eine Vielzahl von Binärfolgen SEQi enthaltenden Quellensignals an mindestens eine Empfangsantenne RA1, wobei das Verfahren ein Senden (S1) einer für die Anzahl n von Sendeantennen EAn repräsentative Information enthält und **dadurch gekennzeichnet ist, dass** es vor einem Sendeschritt (S3) einer der Binärfolgen SEQi des Quellensignals durchführt
- eine Bestimmung (S2) eines jeder der Sendeantennen EAn in einer der zu übermittelnden Binärfolgen SEQi zugeteilten Rangs, und
- eine Bestimmung (S2), durch den zugeordneten Empfänger und für jede der Sendekombinationen der Sendeantennen EAn, eines für die Kombination repräsentativen elektromagnetischen Profils,
so dass es möglich ist, gleichzeitig n Binärelemente zu übertragen (S3), die eine der Binärfolgen SEQi formen.

2. Übertragungsverfahren nach Anspruch 1, **dadurch gekennzeichnet, dass** das elektromagnetische Profil für eine Vielzahl aufeinanderfolgender Binärelemente einer der Binärfolgen repräsentativ ist.

3. Verfahren nach einem der Ansprüche 1 bis 2, **dadurch gekennzeichnet, dass** die n Sendeantennen EAn je auf einem ihr eigenen Leistungspegel senden.

4. Verfahren nach einem der Ansprüche 1 bis 3, **dadurch gekennzeichnet, dass** die n Sendeantennen EAn alle zusammen an jeder der Sendekombinationen beteiligt sind, so dass es dann möglich ist, Symbole von n Bits zu codieren, indem eine Kombination von n Antennen verwendet wird.

5. Sendevorrichtung, die mindestens eine Vielzahl von Sendeantennen EAn eines Quellensignals enthält, wobei das Quellensignal eine Vielzahl von Binärfolgen SEQi enthält, die eine Empfangsantenne RA zu übertragen sind, wobei die Sendevorrichtung **dadurch gekennzeichnet ist, dass** sie enthält:
- ein Übertragungsmodul der Anzahl n von Sendeantennen EAn der Sendevorrichtung zu einem der Empfangsantenne RA zugeordneten Empfänger,
- ein Übertragungsmodul einer Information, die für einen Rang repräsentativ ist, der jeder der Sendeantennen EAn in einer der zu übermittelnden Binärfolgen SEQi zugewiesen ist, und
- ein Übertragungsmodul, zum zugeordneten Empfänger und für jede der Sendekombinationen der n Sendeantennen EAn, eines Signals, das für ein elektromagnetisches Profil repräsentativ ist, das selbst für jede der Sendekombinationen repräsentativ ist.

6. Empfangsvorrichtung, die mindestens eine Empfangsantenne RA eines Quellensignals enthält, das von einer fernen Sendevorrichtung geschickt wird, die eine Vielzahl von Sendeantennen EAn enthält, wobei das Quellensignal eine Vielzahl von Binärfolgen SEQi enthält, wobei die Empfangsvorrichtung **dadurch gekennzeichnet ist, dass** sie enthält:
- ein Bestimmungsmodul der Anzahl n von Sendeantennen EAn der Sendevorrichtung,
- ein Bestimmungsmodul einer Information, die für einen Rang repräsentativ ist, der jeder der Sendeantennen EAn der fernen Sendevorrichtung zugewiesen ist, in einer der zu empfangenden Binärfolgen SEQi, und
- ein Bestimmungsmodul, durch den Empfänger und für jede der Sendekombinationen der Sendeantennen EAn des fernen Senders, eines elektromagnetischen Profils, das für jede der Sendekombinationen repräsentativ ist.

7. Computerprogrammprodukt, das direkt in den inneren Speicher eines Computers geladen werden kann, das Softwarecodeabschnitte zur Ausführung der Schritte des Verfahrens nach einem der Ansprüche 1 bis 4 enthält, wenn das Programm auf einem Computer ausgeführt wird.

## Claims

1. Method for transmitting a source signal comprising a plurality of binary sequences SEQi from at least two transmitting antennas EAn to at least one receiving antenna RA1, said method comprising an operation of transmitting (S1) an item of information representative of the number n of transmitting antennas EAn and being **characterized in that** it implements, prior to a step of transmitting (S3) one of said binary sequences SEQi of said source signal,
- an operation of determining (S2) a position assigned to each one of the transmitting antennas EAn in one of said binary sequences SEQi to be communicated, and
- an operation of determining (S2), by means of said associated receiver and for each one of the transmission combinations of said transmitting antennas EAn, an electromagnetic profile representative of said combination,
such that it is possible simultaneously to transmit (S3) n binary elements that form one of said binary sequences SEQi.

2. Transmission method according to Claim 1, **characterized in that** said electromagnetic profile is representative of a plurality of successive binary elements of one of said binary sequences.

3. Transmission method according to either one of Claims 1 and 2, **characterized in that** each one of said n transmitting antennas EAn transmits at a power level that is specific thereto.

4. Transmission method according to any one of Claims 1 to 3, **characterized in that** said n transmitting antennas EAn are all jointly involved in each one of the transmission combinations, such that it is then possible to encode n-bit symbols by using a combination of n antennas.

5. Transmitting device comprising at least a plurality of transmitting antennas EAn for transmitting a source signal, said source signal comprising a plurality of binary sequences SEQi to be transmitted to a receiving antenna RA, said transmitting device being **characterized in that** it comprises:
- a module for transmitting the number n of transmitting antennas EAn of said transmitting device to a receiver associated with the receiving antenna RA,
- a module for transmitting an item of information representative of a position assigned to each one of the transmitting antennas EAn in one of said binary sequences SEQi to be communicated, and
- a module for transmitting, to said associated receiver and for each one of the transmission combinations of said n transmitting antennas EAn, a signal representative of an electromagnetic profile, which is itself representative of each said one of the transmission combinations.

6. Receiving device comprising at least one receiving antenna RA for receiving a source signal sent by a remote transmitting device that comprises a plurality of transmitting antennas EAn, said source signal comprising a plurality of binary sequences SEQi, said receiving device being **characterized in that** it comprises:
- a module for determining the number n of transmitting antennas EAn of said transmitting device,
- a module for determining an item of information representative of a position assigned to each one of the transmitting antennas EAn of said remote transmitting device in one of said binary sequences SEQi to be received, and
- a module for determining, by means of said receiver and for each one of the transmission combinations of said transmitting antennas EAn of said remote transmitter, an electromagnetic profile representative of each said one of the transmission combinations.

7. Computer program product that is directly loadable into the internal memory of a computer, comprising portions of software code for executing the steps of the method according to any one of Claims 1 to 4 when said program is executed on a computer.
